# EUROPÄISCHE PATENTSCHRIFT

(11) **EP 3 102 849 B1**
(45) Veröffentlichungstag und Bekanntmachung des Hinweises auf die Patenterteilung: **26.06.2019**
(21) Anmeldenummer: 15703285.5
(22) Anmeldetag: 09.02.2015
(51) Int. Cl.: F16G 13/16

(54) **ENERGIEFÜHRUNGSKETTE UND ÜBERWACHUNGSSYSTEM ZUM SCHUTZ GEGEN LEITUNGSABRISS**
DRAG CHAIN AND MONITORING SYSTEM FOR PROTECTING AGAINST LINE BREAKS
CHAÎNE DE TRANSMISSION DE PUISSANCE ET SYSTÈME DE SURVEILLANCE POUR LA PROTECTION CONTRE LA RUPTURE D'ÉLÉMENTS DE CONDUCTION

(30) Priorität: 07.02.2014 DE 202014100540 U
(43) Veröffentlichungstag der Anmeldung: 14.12.2016
(73) Patentinhaber: Igus GmbH, 51147 Köln (DE)
(72) Erfinder: JAEKER, Thilo-Alexander, 53757 Sankt Augustin (DE); BERGER, Felix, 50679 Köln (DE); ERDMANN, Rene, 51149 Köln (DE); BARTEN, Dominik, 53340 Meckenheim (DE)
(74) Vertreter: Lippert Stachow Patentanwälte Rechtsanwälte
(86) Internationale Anmeldenummer: PCT/EP2015/052608
(87) Internationale Veröffentlichungsnummer: WO 2015/118143

(56) Entgegenhaltungen:
- DE-A1- 2 609 451
- DE-U1- 20 312 266
- DE-U1-202012 003 907
- US-B1- 6 425 238

## Beschreibung

Die Erfindung betrifft ganz allgemein Energieführungsketten aus einer Vielzahl miteinander verbundener Glieder oder Segmente zur Führung einer oder mehrerer Leitungen zwischen einer Basis und einem relativ zur Basis beweglichen Mitnehmer. Die Glieder bzw. Segmente sind zur Bildung eines Umlenkbogens gegeneinander abwinkelbar. Zur Gestaltung einer Energieführungskette sind viele Möglichkeiten bekannt. Die Energieführungskette kann z.B. aus einzelnen Kettengliedern zusammengesetzt sein. Eine Energieführungskette im vorliegenden Sinn kann auch abschnittsweise über mehrere abwinkelbare Segmente einstückig oder vollständig einstückig hergestellt sein. Die Erfindung ist also nicht nur auf echte Gliederketten, sondern gleichermaßen auf Leitungsführungen anwendbar, welche in Längsrichtung vollständig einstückig hergestellt sind.

Energieführungsketten, insbesondere solche, welche gegen äußere Einwirkung unvollständig geschützt sind, können beschädigt werden, z.B. durch einen blockierenden Fremdkörper. Hierbei kann es zu einem teilweisen oder vollständigen Bruch kommen. Auch bei geschützten Energieführungsketten kann es, z.B. durch übermäßigen Verschleiß, überhöhte Temperaturen oder andere Randbedingungen außerhalb eines Sollbereichs, zu einem Versagen in der Energieführungskette kommen.

Ein Bruch hat im schlimmsten Fall einen Abriss einer oder mehrerer der geführten Leitungen zur Folge.

Die Erfindung betrifft deshalb insbesondere eine Energieführungskette, welche zum Schutz gegen einen Abriss der geführten Leitung bzw. Leitungen ausgeführt ist, sowie ein entsprechendes Überwachungssystem (Engl. "monitoring system"). Die Energieführungskette umfasst hierzu einen Detektor, z.B. Sensor, Messfühler oder dgl., zur Überwachung, ob die Energieführungskette funktionstüchtig ist. Das Überwachungssystem umfasst mindestens eine Auswertungseinheit, welche mit dem Detektor an der Energieführungskette verbunden ist.

Energieführungsketten mit Überwachungssystem und Sensoren sind aus den internationalen Patentanmeldungen WO 2004/090375 A1 bzw. WO 2013/156607 A1 bekannt. Diese Systeme beruhen auf dem Ansatz einer Kraftmessung. Sie schützen die Kette selbst vor einem Bruch, falls die ausgeübten Zug- oder Druckkräfte außerhalb des Sollwertbereichs liegen. Diese Ansätze sind zuverlässig, erfordern jedoch relativ aufwendige Messtechnik zur Kraftmessung. Zudem sind die Kraftsensoren nur bedingt skalierbar bzw. die zulässigen Sollwertbereiche der Kräfte meist anwendungsspezifisch einzustellen.

Ein anderes Überwachungssystem zum Schutz gegen Leitungsabriss ist aus der internationalen Patentanmeldung WO 2009/095470 A1 bekannt. Hierbei ist der Mitnehmer über eine Kopplung derart lösbar mit der Energieführungskette verbunden, dass bei Überschreitung eines Kraftgrenzwerts ein selbsttätiges Lösen erfolgt und ein Notstopp eingeleitet wird. Die Überschreitung kann durch Kraftmessung bestimmt werden, wobei entsprechend die vorstehenden Nachteile gelten. Alternativ wird dort auch eine Art Sollbruchstelle vorgeschlagen, welche jedoch in der Praxis nur schwierig auf unterschiedliche Anwendungsfälle angepasst werden kann. In beiden Fällen wird es in der Praxis oft zur Fehlauslösung bzw. einem unnötigen Nothalt kommen, da eine Kraftbetragsüberschreitung nicht zwingend mit einem Bruch einhergeht. Zudem soll das System offenbar eine Reserve-Führungseinheit aufweisen, um den durch Trägheit bedingten Bremsweg zu kompensieren.

Die Patentschrift JP 2009 052 714 A bzw. das Patent JP 4847935 B2 beschreiben ein elektro-optisches Brucherkennungssystem für Energieführungsketten. Hierzu wird vorgeschlagen, ein optisches Faserkabel bzw. einen Lichtleiter entlang der Kette außen an den Laschen zu führen. Ein Detektor erfasst die Menge des Lichts, das der Lichtleiter führt, und eine Erkennungsvorrichtung stellt einen Bruch in der Energieführungskette fest, wenn die Lichtmenge eine vorgegebene Schwelle unterschreitet. Diese Lösung ist speziell für die Brucherkennung geeignet. Sie ist jedoch recht aufwendig und kann bei Eigenversagen des typischerweise empfindlichen Lichtleiters, z.B. durch Alterung oder Fremdeinwirkung, zur Fehlauslösung führen.

Ausgehend vom vorstehenden Stand der Technik ist es mithin eine Aufgabe der vorliegenden Erfindung, eine für viele Anwendungsbereiche einfach realisierbare Lösung vorzuschlagen, mit welcher ein Leitungsabriss in einer Energieführungskette vermieden werden kann. Zugleich soll auch die Wahrscheinlichkeit falscher Brucherkennung bzw. die Fehlauslösungsquote reduziert werden. Zudem soll die Lösung möglichst robust und langlebig sein.

Diese Aufgabe löst eine Energieführungskette nach Anspruch 1 bzw. ein Überwachungssystem nach Anspruch 13 und eine Verwendung nach Anspruch 16.

Die erfindungsgemäße Energieführungskette zeichnet sich dadurch aus, dass der Detektor mit einer dehnungsarmen Auslöseschnur (Engl. "triggering cord") zur Erfassung eines tatsächlichen Bruchs bzw. Versagens in der Energieführungskette wirkverbunden ist. Hierbei ist die Auslöseschnur von der Energieführungskette vorzugsweise im Wesentlichen auf Höhe der neutralen Faser geführt. Die neutrale Faser, auch Nulllinie genannt, ist die Schicht des Querschnitts der Energieführungskette, deren Länge sich bei Abwinkelung bzw. beim Verfahren des Umlenkbogens nicht ändert. Bei entsprechender Lage der Auslöseschnur wird die Brucherfassung präziser und einfacher. Vorzugsweise führt die Energieführungskette die Auslöseschnur in regelmäßigen Abständen und zumindest über eine Länge entsprechend dem Bereich, über welchen der Umlenkbogen sich infolge der Mitnehmerbewegung bewegt. Als Auslöseschnur ist jede schnurartige Leine oder Verbindung geeignet, welche mit einem Detektor mechanisch zusammenwirken kann. Als dehnungsarm wird insbesondere jede Auslöseschnur betrachtet, deren Eigendehnung bei der im Betrieb am Mitnehmer nominal zulässigen Höchstzugkraft geringer ist, als die Dehnung der Energieführungskette selbst (einschließlich Spiel der gelenkartigen Verbindungen).

Bei der erfindungsgemäßen Lösung hat der Detektor einen Aufnehmer zur Erfassung eines kinematischen Parameters und die Auslöseschnur wirkt mechanisch mit dem Aufnehmer zusammen. So wird eine besonders einfache und robuste Bauweise erzielt.

Die Auslöseschnur ist dauerhaft flexibel, insbesondere biegeschlaff. Als geeignet dehnungsarm, insbesondere bei mechanischem Wirkprinzip, erwies sich eine Auslöseschnur deren Dehnung, (technische Dehnung), bei Arbeitslast, d.h. bei einer nominalen Zuglast entsprechend dem Normalbetrieb (nicht bei Bruch), <3%, vorzugsweise <1%, bezogen auf die Ursprungslänge beträgt. Vorzugsweise bleibt die Dehnung auch bei doppelter Arbeitslast noch im linearen Elastizitätsbereich.

Die Erfindung geht somit nicht von einer maximal zulässigen Kraft am Mitnehmer aus, bei welcher ein Nothalt erfolgen soll, sondern erfasst durch die Auslöseschnur einen tatsächlichen Bruch der Kette. Somit wird die Fehlauslösungsquote (Engl. "spurious trip rate") erheblich reduziert, d.h. unnötige Ausfälle werden vermieden. Die erfindungsgemäße Zusammenwirkung mit einer Auslöseschnur zur Brucherfassung ermöglicht zudem den Einsatz eines einfacheren und/oder kostengünstiger ausgeführten Detektors. Entsprechendes gilt auch für die Auswertungseinheit.

Die Überwachung mittels einer Auslöseschnur ist im Vergleich zum vorbekannten Kraftmessprinzip auch unabhängiger vom Anwendungsfall, z.B. vom längenbezogenen Gewicht bzw. den im Betrieb zu überwindenden Reibungskräften. Ein weiterer Vorteil der Erfindung liegt mithin darin, dass das Erfassungsprinzip über weite Bereiche von Kettenlängen, d.h. für viele Anwendungen unverändert geeignet ist.

Ein besonders einfacher Detektor kann verwendet werden, wenn die Auslöseschnur in der Art eines Zugseils angeordnet wird. In einer zweckmäßigen Ausführung dieser Art umfasst der Detektor mindestens einen Aufnehmer zur Wegstrecken-, Geschwindigkeits- und/oder Beschleunigungserfassung, d.h. zur Messung von Stecke, Geschwindigkeit, Beschleunigung oder einer Kombination davon als mögliche kinematische Parameter. Der Detektor kann z.B. einen Aufnehmer mit einer Kippschaltung zur Erzeugung eines Ausgangssignals aufweisen. Der Aufnehmer kann auch Teil eines echten Messgeräts, z.B. eines Sensors, Messfühlers oder dgl. sein. Als Aufnehmer ist prinzipiell jede Vorrichtung geeignet, die auf eine Änderung im Zustand der Auslöseschnur im Fall eines Bruchs anspricht.

Es kann insbesondere an jeder Kettenseite eine entsprechende Auslöseschnur mit entsprechendem Aufnehmer vorgesehen werden. Mit zwei Auslöseschnüren kann ein Teilversagen z.B. in nur einem Laschenstrang erkannt werden. Es kann auch durch Redundanz die Fehlauslösequote verringert werden.

In einer kostengünstigen Ausführung zur beidseitigen Überwachung ist eine durchgehende Auslöseschnur entlang eines Laschenstrangs hin und entlang des anderen zurück geführt. Die Auslöseschnur wird hierbei an einem Kettenende umgelenkt, z.B. über eine drehbar gelagerte Umlenkung. Die Umlenkung, insbesondere die Drehachse, kann so mit nur einem Detektor wirkverbunden werden, um eine asymmetrische Auslenkung zu erkennen. Eine solche Asymmetrie bzw. eine Drehung oder Verschiebung in der Umlenkung im Vergleich zum Normalbetrieb lässt auf einen Bruch in einem der beiden Laschenstränge schließen. Dies stellt in der Praxis bei einem Versagen den typischen Verlauf dar, d.h. ein zeitgleicher Bruch beider Laschenstränge ist äußerst selten.

Es ist aber auch denkbar, an jeder Seite eine eigene Auslöseschnur oder nur eine Auslöseschnur an nur einer Seite vorzusehen. Die Auslöseschnur hat dann eine Gesamtlänge etwa gleich der Länge der Energieführungskette und jedenfalls kleiner als das 1,5-fache der Länge der Energieführungskette.

In einer einfachen Ausführung mit beidseitiger Überwachung kann, insbesondere wenn keine Redundanz gewünscht wird, ein einziger Detektor für zwei getrennte Auslöseschnüre oder die zwei Abschnitte einer umgelenkten durchgehende Auslöseschnur vorgesehen werden. Unabhängig vom Typ des Detektors kann dieser am feststehenden Ende oder am beweglichen Ende der Energieführungskette vorgesehen werden.

Es kann bspw. ein herkömmlicher Aufnehmer in der Bauweise eines Zugschalters für ein Sicherheitsseil bzw. für eine Reißleine (Engl: "rope pull safety switch") eingesetzt werden. Auch andere kostengünstige Aufnehmer, insbesondere zur Erfassung sprunghafter Parameteränderungen, sind geeignet, z.B. eine Schalterwippe, ein Linear-Positionsgeber bzw. Wegsensor, Inkrementalgeber, Erschütterungssensor, Beschleunigungssensor, usw. Sie erlauben meist eine Schaltschwelle festzulegen, für eine Signalpegeländerung zwischen zwei Zuständen im Falle eines Bruchs.

Eine eigentliche Messung der Lage, Geschwindigkeit und/oder Beschleunigung am aufnehmerseitigen Ende der Auslöseschnur liegt jedoch auch im Rahmen der Erfindung. Vorzugsweise sollte der Aufnehmer eine Toleranz gegen zeitlich langsame Änderungen, z.B. Temperaturdehnung, und eine zuverlässige Erfassung durch die Auslöseschnur sprunghaft erzeugter Änderungen in der Position gewährleisten. Letzteres kann durch Erfassung von Geschwindigkeit oder ggf. Beschleunigung erleichtert werden.

Bei mechanischem Messprinzip ist es vorteilhaft, wenn an der Energieführungskette separat angebrachte oder integrierte Seilführungen bzw. Ösen vorgesehen sind, welche die Auslöseschnur in Längsrichtung frei beweglich führen. Hierdurch kann auf einfache Weise eine Relativbewegung der Auslöseschnur bei einem Bruch in der Energieführungskette vom Detektor erfasst werden. Zugleich können Ösen die vordefinierte Lage der Auslöseschnur insbesondere auf Höhe der neutralen Faser gewährleisten.

Um die Übertragung von Bewegung der Auslöseschnur auf den Aufnehmer möglichst verzögerungs- und verlustfrei durchzuführen, ist die Auslöseschnur nicht nur technisch dehnungsarm, sondern bevorzugt unter geeigneter Vorspannung gehalten. Eine bevorzugte mechanische Ausführung sieht deshalb vor, dass der Detektor an einem Kettenende vorgesehen ist und die Auslöseschnur dort unter Vorspannung angebracht ist, z.B. mit einem Schnurende am Aufnehmer und mit dem anderen Schnurende am Ende des zu überwachenden Längsbereichs befestigt. Das Ende des zu überwachenden Längsbereichs liegt vorzugsweise am anderen Kettenende bzw. am Mitnehmer, wo das entsprechende Schnurende befestigt ist.

Der überwachte Bereich kann alternativ nur über einen Teil der Länge der Energieführungskette reichen. Es könnte z.B. von jeder Seite ausgehend eine Auslöseschnur etwas mehr als die halbe Gesamtlänge erfassen.

Die Vorspannung kann z.B. eine geeignet vorgespannte Spiralfeder oder eine Kombination aus Umlenkrolle und Spanngewicht erzielen. Der Detektor ist im Falle einer feststehenden Basis zweckmäßig an dieser angeordnet, wodurch eine entsprechende Zusatzleitung in der Energieführung vermieden wird. Auch eine umgekehrte Anordnung liegt jedoch im Rahmen der Erfindung. Ein Vorteil der Erfindung liegt auch darin, dass eine geeignete Vorspannung nur zu einem sehr geringen Teil vom Anwendungsfall abhängt und bei hinreichend dehnungsarmer Auslöseschnur nicht exakt auf die Gesamtlänge der Energieführungskette angepasst werden muss.

Zur Vermeidung von Fehlauslösung allein durch Abwinkelung ist es bei einer zugseilartig wirkenden Auslöseschnur vorteilhaft, wenn die Ösen in regelmäßigen Abständen angeordnet sind, insbesondere in Abständen welche in Längsrichtung betrachtet ≤50%, vorzugsweise ≤33%, der sich über 180° Bogenmaß des Umlenkbogens erstreckenden Länge der Energieführungskette betragen.

In einer besonders bevorzugten Ausführungsform ist an jedem Glied bzw. an jedem Segment eine Führungsöse für die Auslöseschnur vorgesehen. So können Zugkraftänderungen durch Relativbewegung der Schnur im Umlenkbogen reduziert werden.

Zweckmäßig werden die Ösen so ausgeführt, dass diese sich gleitführungsartig, zumindest über einen Anteil der Glied- bzw. Segmentlänge in Längsrichtung erstrecken, und mit Querspiel ausgeführt sind. Zur Minimierung von Verschleiß der Auslöseschnur, weisen die Ösen beidseitig Mündungen auf, welche gewölbt bzw. abgerundet in Längsrichtung öffnen. Der Krümmungsgrad der Mündung ist vorzugsweise an die maximale Abwinkelung der Glieder bzw. Segmente angepasst. So wird Verschleiß durch Reibung an den Ösen selbst reduziert. Die Ösen können auch als rein punktuelle Führung, z.B. torusförmig ausgeführt sein. Im letztgenannten Fall wird der Verlauf der Auslöseschnur im Umlenkbogen weniger dem Verlauf der neutralen Faser entsprechen, sondern sich eher polygonförmig annähern. Eine bessere Näherung an die neutrale Faser im Umlenkbogen kann durch größere Längserstreckung der Ösen erzielt werden. Alternativ können in jedem Glied bzw. Segment zwei Ösen vorgesehen werden, jeweils nahe am benachbarten Glied bzw. Segment.

In einer bevorzugten Ausführung, welche das Nachrüsten bestehender Energieführungsketten erlaubt, wird die Öse als Bestandteil in einen separaten Trennsteg integriert. Trennstege sind oft zur Aufteilung des Innenraums der Energieführungskette bereits vorhanden. Eine Nachrüstung kann auch mit Ösen erfolgen, die als separate Anbauteile, insbesondere als Spritzgussteile, zur Befestigung an den Gliedern bzw. Segmenten, z.B. an den Trennstegen oder aber an Seitenlaschen ausgeführt sind. Auch Ösen, welche bei der Herstellung bereits in die Seitenlaschen der Energieführungskette integriert sind, erlauben es später, die Auslöseschnur und die Sensorik nachzurüsten.

Bekanntermaßen entstehen beim Wechsel zwischen Zug- und Schubbelastung in den meisten herkömmlichen Energieführungsketten durch Spiel der Gelenkverbindungen bedingte Dehnungen bzw. Stauchungen, welche bei der Auswertung bzw. Erfassung von Aufnehmer, Detektor und/oder Auswertungseinheit im Sinne einer Toleranz zu berücksichtigen wären. Dies gilt insbesondere bei langen Energieführungsketten. Um diesen Effekt zu reduzieren, ist es zweckmäßig, wenn die Energieführungskette mit einer Zugentlastung ausgerüstet ist. Eine geeignete partielle Zugentlastung hat die Anmelderin in der internationalen Patentanmeldung WO 99/42743 A1 vorgeschlagen. Eine aufwendigere Zugentlastung ist aus der Offenlegungsschrift DE 19752377 A1 bekannt.

Bei mechanischem Erfassungsprinzip ist die Auslöseschnur vorzugsweise als Seil bzw. Kabel oder als Einzelfaser, insbesondere aus Stahldraht oder aus technischem Kunststoff, hergestellt. Die eingangs erwähnte geringe Dehnbarkeit bei Arbeitslast ist mit solchen Seilen oder Kabel ohne weiteres erzielbar. Die Zugfestigkeit kann geringer sein als die Zugfestigkeit der Energieführungskette, soweit sichergestellt ist, dass sie für die Zusammenwirkung mit dem Detektor, z.B. für eine vorgesehene Federspannung ausreicht. Die Auslöseschnur ist unabhängig vom Wirkprinzip flexibel und dauerbeständig gegen stetig wechselnde Biegebeanspruchung zu wählen.

Es kann vorgesehen sein, dass die Auslöseschnur bei einem Bruch in der Kette selbst ebenfalls bricht. Hierzu kann vorgesehen werden, dass die Auslöseschnur mit geringer Zugfestigkeit ausgeführt ist, so dass bei einem Bruch in der Energieführungskette auch ein Bruch der Auslöseschnur erfolgt. Auf diese Weise wird bei einem Bruch eine Unterbrechung vom Detektor erfasst. Dies ermöglicht z.B. ein flexibler Auslöser mit geringer Zugfestigkeit und vorzugsweise hohem Streckgrenzenverhältnis.

Unabhängig vom Erfassungsprinzip ist es wie erwähnt vorteilhaft, wenn zwei Auslöseschnüre vorgesehen sind. Zweckmäßig ist eine erste Auslöseschnur entlang einer Außenseite vorgesehen und eine zweite Auslöseschnur entlang der gegenüberliegenden Außenseite vorgesehen, wobei vorzugsweise für jede Seite ein entsprechender Aufnehmer mit der jeweiligen Auslöseschnur verbunden ist. Herkömmliche Bauweisen sind insbesondere solche, in denen jedes Glied jeweils zwei äußere Seitenlaschen bzw. -teile aufweist, welche gelenkartig mit benachbarten Seitenlaschen bzw. - teilen verbunden sind, wobei die Laschenstränge typischerweise durch Querstege verbunden sind.

Die Erfindung betrifft neben der speziellen Ausstattung einer Energieführungskette auch ein Überwachungssystem nach dem Oberbegriff aus Anspruch 16 zum Schutz einer Energieführungskette gegen einen Leitungsabriss.

Dieses Überwachungssystem zeichnet sich durch eine Energieführungskette entsprechend einer der vorstehenden Ausführungsformen aus, wobei der mit der Auslöseschnur verbundene Detektor an die Auswertungseinheit angeschlossen ist, und die Auswertungseinheit durch den Detektor erfasste Signale hinsichtlich eines möglichen Bruchs in der Energieführungskette auswertet.

Geeignete Gestaltungen der Auswertungseinheit sind dem Fachmann zugänglich, insbesondere eine Anpassung einer Auswertungseinheit ähnlich denen aus WO 2004/090375 A1 bzw. WO 2013/156607 A1, oder einer Auswertungseinheit vom Typ PPDS basic, PPDS advanced oder PPDS pro (erhältlich bei igus GmbH, 51127 Köln, Deutschland). Die Auswertungseinheit kann das Signal des Detektors durch eine Analogschaltung z.B. mittels eines Schmitt-Triggers, oder durch eine Digitalschaltung mit einer Recheneinheit, wie z.B. Mikroprozessor, FPGA, SPS usw., auswerten und dient vorteilhaft zur Signalisierung des Störfalls an die Anlagensteuerung. Die Auswertung kann auch bereits im Detektor selbst erfolgen, welche dann ein aufbereitetes Signal an die Auswertungseinheit übermittelt.

Vorteilhaft ist die Auswertungseinheit so ausgeführt, dass sie einen Nothalt des Mitnehmers auslöst, wenn über die Auslöseschnur ein Bruch in der Energieführungskette erkannt wurde. Bei Verwendung eines echten Messmittels bzw. Messgeräts im bzw. als Detektor, z.B. einem LinearWegsensor, ist eine Ausführung zweckmäßig, bei welcher die Auswertungseinheit einen Bruch erkennt, wenn das Messsignal vom Detektor außerhalb eines Toleranzfelds liegt. Hierzu sind bspw. die o.g. Geräte bereits geeignet.

Neben der Energieführungskette und dem zugehörigen Überwachungssystem betrifft die Erfindung auch einen speziell zur Führung der Auslöseschnur geeigneten Trennsteg. Dieser zeichnet sich erfindungsgemäß dadurch aus, dass der Trennsteg eine als Seilführung dienende Öse für eine in Längsrichtung der Energieführungskette verlaufende Auslöseschnur umfasst. Die Öse kann hierbei als separates Anbauteil hergestellt und am Trennsteg befestigt sein, oder fest in den Trennsteg integriert sein. Geeignet ist für beide Fälle z.B. eine Herstellung im Spritzgussverfahren.

Schließlich betrifft die Erfindung auch die Verwendung eines Detektors und einer dehnungsarmen Auslöseschnur zur Erfassung eines Bruchs in einer Energieführungskette gemäß Anspruch 20. Hierbei ist die Auslöseschnur mechanisch mit dem Detektor wirkverbunden und der Detektor erkennt einen Bruch in der Energieführungskette auf Grundlage einer Veränderung eines kinematischen Parameters in bzw. an der Auslöseschnur.

Weitere Einzelheiten, Vorteile und Merkmale der Erfindung lassen sich der nachfolgenden Beschreibung eines Ausführungsbeispiels anhand der beigefügten Zeichnungen entnehmen. Dabei zeigen:
- FIG.1A-1B:: ein erfindungsgemäßes Überwachungssystem sowie eine erfindungsgemäße Energieführungskette in schematischer Seitenansicht, im funktionstüchtigen Zustand (FIG.1A) und bei einem Bruch in der Energieführungskette (FIG.1B);
- FIG.2A-2B:: einen schematischen Verlauf des Ausgangssignals eines Detektors des Überwachungssystems, bei Betrieb im funktionstüchtigen Zustand gemäß FIG.1A und im Fall eines Bruchs in der Energieführungskette gemäß FIG.1B;
- FIG.3:: eine Draufsicht einer erfindungsgemäß ausgerüsteten Energieführungskette;
- FIG.4:: einen Längsschnitt gemäß Schnittlinie IV-IV in FIG.3, mit einer mechanisch wirkenden Auslöseschnur, welche durch Ösen geführt ist;
- FIG.5:: ein Beispiel eines Detektors, mit welchem die Auslöseschnur aus FIG.4 zusammenwirkt.

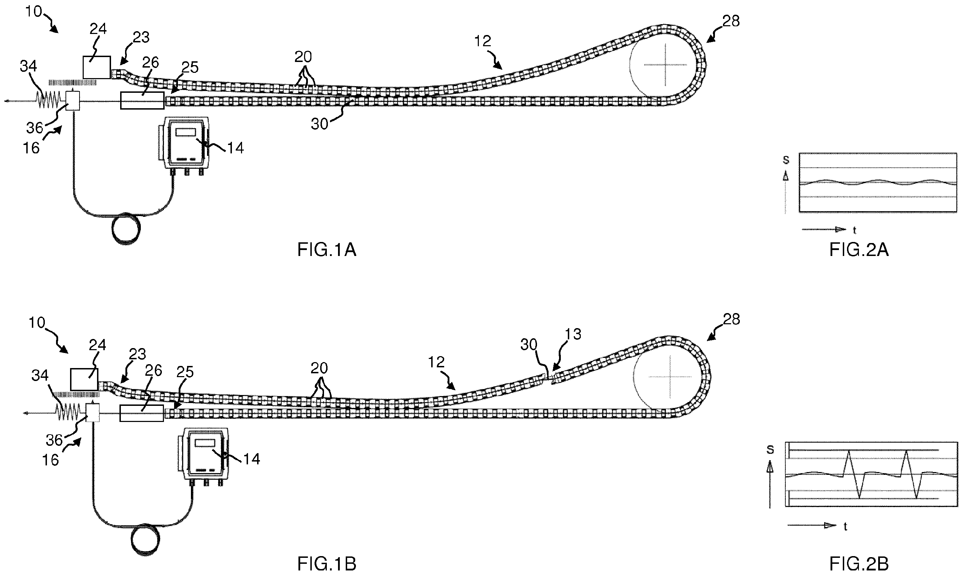

FIG.1A-1B zeigen als Prinzipschema ein Überwachungssystem, allgemein mit 10 bezeichnet, zur Überwachung der Funktionstüchtigkeit einer Energieführungskette 12 (nachfolgend kurz: EFK 12). Das Überwachungssystem 10 umfasst als Hauptbestandteile: eine speziell angepasste bzw. ausgerüstete EFK 12, eine Auswertungseinheit 14 und einen an der EFK 12 angeordneten Detektor 16. Der Detektor 16 ist signaltechnisch mit der Auswertungseinheit 14 verbunden. Das Überwachungssystem 10 dient insbesondere zum Schutz gegen einen Abriss der geführten Leitung(en) im Fall eines Versagens der EFK 12.

Wenn die EFK 12 an einer Position teilweise oder vollständig durchbrochen ist, wie beispielhaft bei 13 in FIG.1B dargestellt, erfüllt sie ihre Funktion in der Regel nicht mehr. Nach einem Bruch kann die EFK 12 den Schutz der nicht näher gezeigt(en) Leitung(en), insbesondere gegen Abknicken, nicht gewährleisten.

Zur Führung von einer oder mehreren Leitung(en), wie Kabeln, Schläuchen oder dgl., hat die EFK 12 einen weitestgehend bekannten Aufbau. Die EFK 12 besteht z.B. aus einer Vielzahl einzelner Kettenglieder 20, welche quer zur Längsrichtung gelenkig miteinander verbunden sind. Sie hat ein bewegliches Kettenende 23, das an einem Mitnehmer 24 befestigt ist. Die EFK 12 hat ferner ein feststehendes Kettenende 25, das an einer meist raumfesten Basis 26 fest angeflanscht ist. Der Mitnehmer 24 fährt bspw. entlang der Horizontalen hin- und her, nach links und rechts in FIG.1A-1B, relativ zur Basis 26. Der Mitnehmer 24 ist z.B. eine bewegliche Anschlussstelle in einer Maschine, welche mit Energie, Daten und/oder Medien zu versorgen ist. Die Basis 26 bildet meist die feststehende Anschlussstelle. Der Mitnehmer 24 kann alternativ auch vertikalbeweglich oder entlang zwei Achsen fahrbar sein. Die EFK 12 hat einen Umlenkbogen 28, welcher entsprechend der Mitnehmerbewegung mitfährt. Der Umlenkbogen 28 ist z.B. über eine Umlenkrolle, oder meistens durch winkelbegrenzende Anschläge der Kettenglieder 20 definiert.

Das Überwachungssystem 10 überwacht, ob ein Versagen der EFK 12 bzw. ein Bruch 13 auftritt. Wenn der Detektor 16 einen solchen Bruch 13 erfasst, erkennt dies die Auswertungseinheit 14 und signalisiert dies weiter an eine übergeordnete (nicht gezeigte) Ebene, z.B. eine Maschinensteuerung oder ein Automatisierungssystem an sich bekannter Bauart. Bei Erfassung eines Bruchs 13 wird ein Nothalt des Mitnehmers 24 ausgelöst. So kann die EFK 12 an der Bruchstelle repariert werden, noch bevor Schaden an der/den Leitung(en) entsteht.

Ein wesentlicher Erfindungsaspekt liegt im Erfassungsprinzip, anhand dessen ein Bruch 13 durch den Detektor 16 erkannt wird. Dies wird erfindungsgemäß durch mindestens eine Auslöseschnur 30 erreicht, welche mit dem Detektor 16 wirkverbunden ist und sich hierzu über einen Teil oder die gesamte Länge der EFK 12 erstreckt.

In der gezeigten Ausführungsform nach FIG.1A bis FIG.5 wirkt die Auslöseschnur 30 mechanisch mit dem Detektor 16 zusammen.

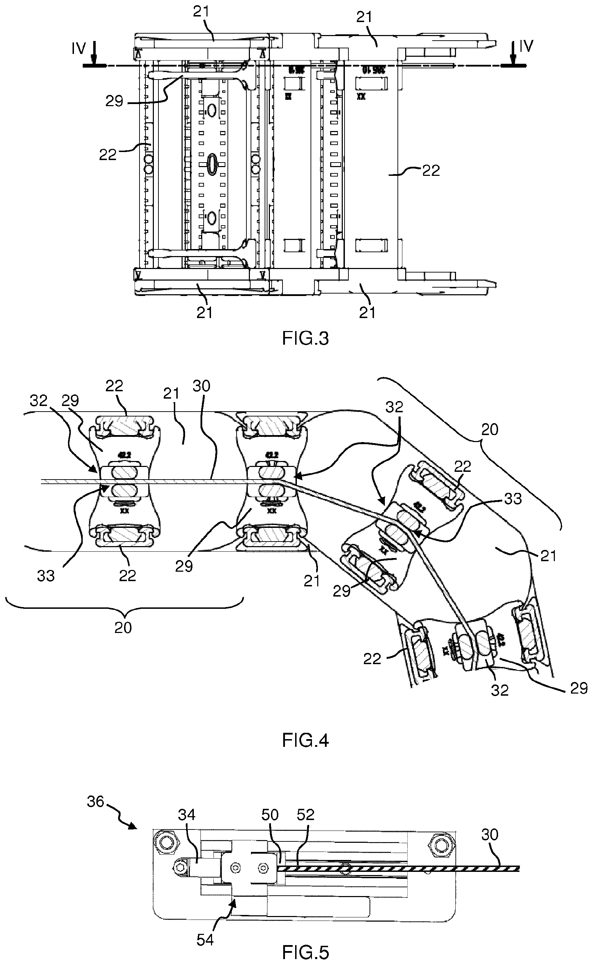

An jeder Seite der EFK 12 nach FIG.1A bis FIG.5 ist eine zugseilartige Auslöseschnur 30 mittels Ösen 32, die FIG.4 näher zeigt, in der EFK 12 geführt. Die Ösen 32 sind zur Führung möglichst exakt auf Höhe der neutralen Faser der EFK 12 gestaltet. Die Ösen 32 sind in regelmäßigen Abständen, nach FIG.4 jeweils z.B. an jedem Kettenglied 20, oder bei kürzeren Kettengliedern z.B. an jedem zweiten oder dritten Kettenglied 20 vorgesehen. Die Auslöseschnur 30 ist am Schnurende, welches auf Seite der Basis 26 liegt, durch eine Spannfeder 34 unter Vorspannung gesetzt. Dieses Schnurende ist an einem beweglichem Teil des Detektors 16 (s. FIG.5) befestigt, welcher durch die Spannfeder 34 beaufschlagt ist. Das andere Schnurende der Auslöseschnur 30 ist fest am Ende des zu überwachenden Längsbereichs befestigt. In FIG.1A-FIG.5 ist die Auslöseschnur am beweglichen Kettenende 23 und/oder am Mitnehmer 24 befestigt. Dementsprechend erstreckt sich die Auslöseschnur 30 über die gesamte Länge der EFK 12 und kann somit an jeder Position der EFK 12 einen Bruch 13 erfassen. Die Auslöseschnur 30 sollte zumindest über eine Länge entsprechend dem kritischen Bewegungsbereich, insbesondere des Umlenkbogens 28 reichen.

Im Falle eines Bruchs 13, entsteht an der Bruchstelle durch Auseinanderklaffen der Bruchenden der EFK 12 ein größerer Abstand zwischen zwei Ösen 32. So entsteht eine Verlagerung der definiert geführten Auslöseschnur 30 aus einer vordefinierten Nominallage bzw. ihrem Normalverlauf heraus. Hierdurch wiederum lässt sich am vorgespannt befestigten Schurende der Auslöseschnur 30 eine kinematische Veränderung in Position bzw. Geschwindigkeit oder Beschleunigung feststellen. Die Erfassung erfolgt im Detektor 16 nach FIG.1A-FIG.5 durch einen der Auslöseschnur 30 zugeordneten Aufnehmer 36, z.B. einen Linearwegsensor. Die Auslöseschnur 30 wirkt somit als Zugseil kraftübertragend auf den entsprechenden Aufnehmer 36. Auch ein Abreißen der Auslöseschnur 30 ist natürlich erfassbar, aber nicht erforderlich.

In bevorzugter Ausführung sind zwei Auslöseschnüre 30 vorgesehen, jeweils eine zu jeder Seite der EFK 12. Der Detektor 16 umfasst entsprechend zwei Aufnehmer 36. Grundsätzlich ist jedoch eine Ausführung mit nur einer Auslöseschnur 30, z.B. mittig durch den Querschnitt der EFK 12, nur einem entsprechenden Aufnehmer 36 ausreichend.

FIG.2A zeigt einen Verlauf des Ausgangssignals S eines Aufnehmers 36, welcher einem Normalbetrieb z.B. einer periodischen Hin- und Herbewegung des Mitnehmers 24 entspricht. Es treten lediglich betragsmäßig geringe, zeitliche langsame Schwankungen auf. FIG.2B hingegen zeigt sprunghafte Signalspitzen, welche im Falle eines Bruchs 13 in der EFK 12 entstehen, da die Auslöseschnur 30 auf den Aufnehmer 36 eine stoßartige Bewegung überträgt. Eine derartige Signalspitze entsteht z.B. im Zeitpunkt des Bruchs selbst, aber auch z.B., wenn die Bruchstelle durch den Umlenkbogen 28 bewegt wird.

Signalspitzen im Ausgangssignal S, wie in FIG.2B, können durch an sich bekannte Signalverarbeitung, z.B. einen Einkanalanalysator oder Fensterdiskriminator, im Detektor 16 aufbereitet werden, um zuverlässig einen Bruch 13 zu erfassen und von unerheblichen Schwankungen zu unterscheiden. Der Detektor 16 gibt ein entsprechendes Ausgangssignal signaltechnisch an die Auswertungseinheit 14 weiter. Die Signalverarbeitung des Ausgangssignals S des Aufnehmers 36 kann auch weitgehend in der Auswertungseinheit 14 selbst erfolgen. Die Auswertungseinheit 14 erkennt in beiden Fällen, dass ein Bruch erfasst wurde und gibt ein entsprechendes Ausgangssignal an die übergeordnete Ebene.

Da ein Schaden an geführten Leitungen meist erst entsteht, wenn trotz eines Bruchs 13 der Betrieb der EFK 12 über eine gewisse Dauer fortgesetzt wurde, vermeidet die Erfassung von einem tatsächlichen Bruch unnötige Fehlauslösungen. Es kann auch eine zusätzliche Toleranz z.B. mit entsprechendem Zähler in der Auswertungseinheit 14 vorgesehen werden, um den Störfall erst nach einigen wenigen Signalspitzen oder nach Auswertung beider Aufnehmer 36 auszulösen.

Anstelle einer echten Messung des kinematischen Parameters, hier der Wegstrecke (oder z.B. Geschwindigkeit und/oder Beschleunigung) durch den Aufnehmer 36, kann lediglich eine Schwellenüberschreitung des kinematischen Parameters der Auslöseschnur 30 erfasst und, z.B. als Ausgangspegeländerung, an die Auswertungseinheit 14 weitergegeben werden. Dies kann z.B. einfach mittels einer Schalterwippe bzw. eines Kippschalters (nicht gezeigt) als Aufnehmer erreicht werden, mit welchem die Auslöseschnur z.B. nach Art eines Stolperdrahts (Engl. "tripwire") zusammenwirkt.

FIG.3-4 zeigen in einem Längsabschnitt der EFK 12 am Umlenkbogen 28 einen beispielhaften, typischen Aufbau der Kettenglieder 20. Die Kettenglieder 20 sind hier aus vier Hauptbestandteilen zusammengesetzt: aus zwei gegenüberliegenden Seitenlaschen 21 und zwei Querstegen 22, welche die Seitenlaschen 21 parallel halten. Diese Einzelteile 21, 22 sind z.B. aus Kunststoff im Spritzgussverfahren hergestellt. Jede Seitenlasche 21 weist jeweils an einem Längsende einen Lagerzapfen und am gegenüberliegenden Längsende eine entsprechende Aufnahme auf. Ein Paar aus Zapfen und Aufnahme bildet eine senkrecht zur Längsrichtung schwenkbare Gelenkverbindung zwischen längs benachbarten Seitenlaschen 21. Bei der EFK 12 nach FIG.3-4 liegt die Schwenkachse der Gelenkverbindung im Querschnitt jeweils etwa auf halber Höhe zwischen den Schmalseiten der Seitenlaschen 21. Entsprechend ergibt sich hier, in Bezug auf den Querschnitt der EFK 12, eine etwa mittige Lage der neutralen Faser. Die Verkettung der Seitenlaschen 21 ergibt an jeder Seite jeweils einen Laschenstrang.

Bei gestreckter EFK 12 ist die vorgespannte Auslöseschnur 30 möglichst genau auf Höhe der neutralen Faser angeordnet, d.h. auf Höhe der Schwenkachsen wie links in FIG.4 zu sehen. Dementsprechend sind die Ösen 32 so angeordnet, dass die Durchführung der Auslöseschnur 30 auf dieser Höhe liegt. Im Beispiel nach FIG.3-4 sind die Ösen 32 als separate Anbauteile z.B. im Spritzguss hergestellt und mittels einer Rastverbindung fest an Trennstegen 29 innen in der EFK 12 befestigt. Die Trennstege 29 sind, als separate Teile bekannter Bauweise, mittels einer Rastverbindung an beiden Querstegen 22 befestigt, insbesondere in Längs- und Höhenrichtung sowie ggf. in Querrichtung an der EFK 12 gesichert. Alternativ können die Ösen 32 auch unmittelbar bei der Herstellung entsprechend in die Trennstege 29 integriert sein. Nicht näher gezeigt ist eine seitliche Einfädelöffnung jeder Öse 32, um die Auslöseschnur 30 leicht seitlich einbringen zu können. Alternativ zum gezeigten Beispiel könnten Ösen z.B. auch seitlich außen an den Seitenlaschen 21 vorgesehen sein.

Die Ösen 32 führen bei mechanischem Wirkprinzip die Auslöseschnur 30 in Längsrichtung frei beweglich und verschleißarm, jedoch auf der vordefinierten Höhe durch die EFK 12. Bei einem Bruch in der EFK 12, z.B. im Strang der Seitenlaschen 21 einer Seite, entsteht notwendigerweise eine Relativbewegung der Auslöseschnur 30, da sich der Abstand zwischen benachbarten Ösen 32 vergrößert.

In der EFK 12 nach FIG.3-4 ist die Begrenzung der Abwinkelung zwischen zwei Kettengliedern 20 durch Anschläge so eingestellt, dass der Umlenkbogen 28 stets mindestens drei Kettenglieder 20 umfasst. Bei Anordnung einer Öse 32 an jedem Kettenglied ist der Abstand dazwischen, bezogen auf die Abschnittslänge der EFK 12 über 180° Bogenmaß des Umlenkbogens 28, kleiner als ein Drittel (≤33%) dieser Abschnittslänge. So entsteht im Umlenkbogen 28 eine gute Näherung des Verlaufs der Auslöseschnur 30 an die Lage der neutralen Faser.

Gemäß FIG.3-4 sind die Ösen 32 ferner gleitführungsartig, mit einer Erstreckung in Längsrichtung, und mit ausreichend Querspiel zur freien Seil- bzw. Schnurführung ausgeführt. Die Ösen 32 weisen an beiden Längsenden Mündungen 33 auf, welche in Längsrichtung gewölbt bzw. abgerundet öffnen. Der Krümmungsgrad bzw. -radius der Mündungen 33 ist in FIG.4 so gewählt, dass auch bei maximaler Abwinkelung benachbarter Kettenglieder 20, eine kantenfreie, verschleißarme Durchführung der Auslöseschnur 30 gegeben ist. Vorzugsweise ist das Material der Auslöseschnur 30 so gewählt, dass ggf. die Ösen 32 und nicht die Auslöseschnur 30 verschleißen.

Geeignet ist z.B. ein Bremszug aus Stahldrähten oder ein Zugseil aus Kunststoff-Fasern. Bei mechanischem Wirkprinzip wird als Auslöseschnur 30 ein dehnungsarmes Seil, z.B. aus Dyneema®-Fasern, mit technischer Dehnung <1% bei Arbeitslast bevorzugt. FIG.3-4 zeigen eine Auslöseschnur 30 entlang einer Außenseite, hier nahe an den Seitenlaschen 21 (oben in FIG.3). An der gegenüberliegenden Außenseite (unten in FIG.3) ist die EFK 12 vorzugsweise mit einer zweiten Auslöseschnur 30 und mit entsprechenden Ösen 32 auf identische Weise ausgerüstet.

FIG.5 zeigt rein beispielhaft einen geeigneten Aufnehmer 36 für den Detektor 16. Dieser Aufnehmer 36 ist als linearer Wegsensor ausgeführt. Er umfasst einen Schlitten 50, der an einer feststehenden Führungsschiene 52 entlang einer Achse in Längsrichtung der EFK 12 beweglich geführt ist. Die Führungsschiene 52 ist an der Basis 26 befestigt. An einer Seite des Schlittens 50 ist das bewegliche Schnurende der Auslöseschnur 30 befestigt. An der anderen Seite ist die Spannfeder 34 angebracht. Durch die an der Basis 26 vorgespannt gehaltene Spannfeder 34 wird die Auslöseschnur 30 vorgespannt. Der Schlitten 50 sollte im Ruhezustand etwa mittig zwischen Endanschlägen der Führungsschiene 52 liegen. Der Aufnehmer 36 erfasst die Bewegung eines am beweglichen Schlitten 50 vorgesehen Positionsgebers 54, z.B. eines Inkrementalgebers. Bei Relativbewegung der Auslöseschnur 30 im Verhältnis zur eigentlichen EFK 12 wird Bewegung auf den Schlitten 50 und somit den Positionsgeber 54 übertragen. Eine Bewegung des Positionsgebers 54 wird als Ausgangssignal S (s. FIG.2A-2B) vom Aufnehmer 36 ausgegeben und vom Detektor 16 oder ggf. durch die Auswertungseinheit 14 verarbeitet, um das Auftreten eines Bruchs 13 zu erfassen.

### Bezugszeichenliste

- 10: Überwachungssystem
- 12: Energieführungskette (kurz: EFK)
- 13: Bruch
- 14: Auswertungseinheit
- 16: Detektor
- 20: Kettenglied
- 21: Seitenlasche
- 22: Quersteg
- 23: bewegliches Kettenende
- 24: Mitnehmer
- 25: feststehendes Kettenende
- 26: Basis
- 28: Umlenkbogen
- 29: Trennsteg
- 30: Auslöseschnur
- 32: Öse
- 33: Mündung
- 34: Spannfeder
- 36: Aufnehmer
- 50: Schlitten
- 52: Führungsschiene
- 54: Positionsgeber

## Patentansprüche

1. Energieführungskette (12) zum Schutz gegen ein Versagen, umfassend: eine Vielzahl miteinander verbundener Glieder (20) bzw. Segmente zur Führung einer oder mehrerer Leitungen, wie Kabeln, Schläuchen oder dgl., zwischen einer Basis (26) und einem relativ zur Basis beweglichen Mitnehmer (24), wobei die Glieder bzw. Segmente zur Bildung eines Umlenkbogens (28) gegeneinander abwinkelbar sind; sowie einen Detektor, welcher zur Überwachung der Energieführungskette vorgesehen ist; **dadurch gekennzeichnet, dass**
der Detektor (16) mit einer dehnungsarmen Auslöseschnur (30) zur Erfassung eines Versagens der Energieführungskette wirkverbunden ist und einen Aufnehmer (36) zur Erfassung eines kinematischen Parameters umfasst, wobei die Auslöseschnur (30) mechanisch mit dem Aufnehmer (36) zusammenwirkt und von der Energieführungskette geführt ist.

2. **Energieführungskette** nach Anspruch 1, **dadurch gekennzeichnet, dass** der Detektor (16) einen Aufnehmer (36) zur Wegstrecken-, Geschwindigkeits- und/oder Beschleunigungserfassung umfasst und dass die Auslöseschnur (30) zugseilartig mit dem Aufnehmer (36) zusammenwirkt.

3. Energieführungskette nach Anspruch 2, **dadurch gekennzeichnet, dass** an oder in der Energieführungskette (12) Ösen (32) vorgesehen sind, durch welche die Auslöseschnur (30) in Längsrichtung frei beweglich geführt ist, wobei eine Relativbewegung der Auslöseschnur bei einem Bruch in der Energieführungskette vom Detektor erfasst wird,
wobei die Auslöseschnur (30) vorzugsweise unter Vorspannung angebracht ist.

4. Energieführungskette nach Anspruch 3, **dadurch gekennzeichnet, dass** die Ösen (32) in regelmäßigen Abständen vorgesehen sind, welche ≤50%, vorzugsweise ≤33%, der sich über 180° Bogenmaß des Umlenkbogens erstreckenden Länge der Energieführungskette betragen, wobei die Ösen (32) vorzugsweise an jedem Glied bzw. Segment (20) vorgesehen sind.

5. Energieführungskette nach einem der Ansprüche 3 bis 4, insbesondere nach Anspruch 4, **dadurch gekennzeichnet, dass** die Ösen gleitführungsartig in Längsrichtung erstreckt und mit Querspiel ausgeführt sind und beidseitig Mündungen (33) aufweisen, welche gewölbt bzw. abgerundet in Längsrichtung öffnen, wobei der Krümmungsgrad vorzugsweise an die maximale Abwinkelung der Glieder (20) bzw. Segmente angepasst ist.

6. Energieführungskette nach einem der Ansprüche 3 bis 5, insbesondere nach Anspruch 5, **dadurch gekennzeichnet, dass** die Ösen (32) als Bestandteil in separate Trennstege (29) integriert sind oder als separate Anbauteile, insbesondere als Spritzgussteile, zur Befestigung an Trennstegen oder an Seitenlaschen (21) ausgeführt sind.

7. Energieführungskette nach einem der Ansprüche 3 bis 5, insbesondere nach Anspruch 5, **dadurch gekennzeichnet, dass** die Ösen in Seitenlaschen (21) der Energieführungskette integriert sind.

8. Energieführungskette nach einem der Ansprüche 1 bis 7, **dadurch gekennzeichnet, dass** die Energieführungskette (12) mit einer Zugentlastung ausgerüstet ist.

9. Energieführungskette nach einem der Ansprüche 1 bis 8, **dadurch gekennzeichnet,**
**dass** die Auslöseschnur (30) als Seil bzw. Kabel oder als Einzelfaser, insbesondere aus Stahldraht oder aus technischem Kunststoff, hergestellt ist, wobei die Auslöseschnur bevorzugt so gewählt ist, dass sie bei Arbeitslast eine Dehnung <3%, besonders bevorzugt <1% aufweist; und/oder
**dass** die Auslöseschnur eine Gesamtlänge hat, welche im Wesentlichen gleich ist wie die Länge der Energieführungskette und kleiner ist als das 1,5-fache der Länge der Energieführungskette.

10. Energieführungskette nach einem der Ansprüche 1 bis 8, insbesondere nach Anspruch 1, **dadurch gekennzeichnet, dass** die Auslöseschnur von der Energieführungskette auf Höhe ihrer neutralen Faser geführt ist, wobei eine Relativbewegung der Auslöseschnur bei einem Bruch in der Energieführungskette vom Detektor erfasst wird.

11. Energieführungskette nach einem der Ansprüche 1 bis 8, insbesondere nach Anspruch 1, **dadurch gekennzeichnet, dass** die Auslöseschnur von der Energieführungskette zumindest über eine Länge entsprechend dem Bewegungsbereich des Umlenkbogens (28) geführt ist, wobei die Auslöseschnur von der Energieführungskette vorzugsweise in regelmäßigen Abständen geführt ist.

12. Energieführungskette nach einem der Ansprüche 1 bis 11, **dadurch gekennzeichnet, dass** jedes Glied jeweils zwei äußere Seitenlaschen (21) bzw. -teile aufweist, welche gelenkartig mit benachbarten Seitenlaschen bzw. -teilen verbunden sind, wobei eine erste Auslöseschnur (30) entlang einer Außenseite vorgesehen ist und eine zweite Auslöseschnur (30) entlang der gegenüberliegenden Außenseite vorgesehen ist, und wobei vorzugsweise für jede Seite gesondert ein entsprechender Aufnehmer (36) mit der jeweiligen Auslöseschnur (30) verbunden ist.

13. Überwachungssystem (10) zum Schutz einer Energieführungskette gegen ein Versagen, umfassend eine Auswertungseinheit (14), welche mit einem an der Energieführungskette angeordneten Detektor verbunden ist, **gekennzeichnet durch** eine Energieführungskette (12) nach einem der Ansprüche 1 bis 12, wobei der mit der Auslöseschnur (30) verbundene Detektor (16) an die Auswertungseinheit angeschlossen ist und die Auswertungseinheit (14) durch denDetektor erfasste Signale hinsichtlich eines möglichen Versagens der Energieführungskette auswertet.

14. Überwachungssystem nach Anspruch 13, wobei die Auswertungseinheit (14) einen Nothalt des Mitnehmers auslöst, wenn über die Auslöseschnur (30) ein Versagen der Energieführungskette erkannt wurde.

15. Überwachungssystem nach Anspruch 13 oder 14, wobei die Auswertungseinheit (14) ein Versagen erkennt, wenn ein vom Detektor (16) erzeugtes Signal (S) außerhalb eines Toleranzfelds liegt.

16. Verwendung eines Detektors (16) und einer dehnungsarmen Auslöseschnur (30) zur Erfassung eines Versagens einer Energieführungskette (12), wobei die Auslöseschnur (30) mechanisch mit dem Detektor (16) wirkverbunden, und der Detektor ein Versagen der Energieführungskette auf Grundlage einer Veränderung eines kinematischen Parameters der Auslöseschnur (30) erfasst.

## Claims

1. An energy guiding chain (12) for protection against a failure including: a plurality of interconnected link members (20) or segments for guiding one or more lines like cables, hoses or the like between a base (26) and an entrainment member (24) moveable relative to the base, wherein the link members or segments can be angled relative to each other to form a direction-changing curve (28); and a detector for monitoring the energy guiding chain,
**characterised in that** the detector (16) is operatively connected to a low-stretch triggering cord (30) for detecting a failure in the energy guiding chain and includes a sensor (36) for detecting a kinematic parameter, wherein the triggering cord (30) mechanically cooperates with the sensor (36) and is guided by the energy guiding chain.

2. An energy guiding chain according to claim 1 **characterised in that** the detector (16) includes a sensor (36) for detecting travel distance, speed and/or acceleration and that the triggering cord (30) cooperates with the sensor (36) in the manner of a traction cable.

3. An energy guiding chain according to claim 2 **characterised in that** provided at or in the energy guiding chain (12) are eyes (32) by which the triggering cord (30) is freely moveably guided in the longitudinal direction, wherein a relative movement of the triggering cord is detected by the detector upon a break in the energy guiding chain, wherein the triggering cord (30) is preferably mounted in a pre-stressed condition.

4. An energy guiding chain according to claim 3, **characterised in that** the eyes (32) are provided at regular spacings which are <50%, preferably <33%, of a length of the energy guiding chain that extends over a 180° arc of the direction-changing curve, wherein the eyes (32) are preferably provided at each link member or segment (20).

5. An energy guiding chain according to one of claims 3 or 4, in particular according to claim 4, **characterised in that** the eyes extend in the manner of a sliding guide in the longitudinal direction and have transverse play and at both sides have mouth openings (33) which open in a curved or rounded configuration in the longitudinal direction, wherein the degree of curvature is preferably adapted to the maximum angled position of the link members (20) or segments.

6. An energy guiding chain according to one of claims 3 through 5, in particular according to claim 5, **characterised in that** the eyes (32) are integrated as a component part into separate separating limbs (29) or are in the form of separate attachment members, in particular in the form of injection molded members, for fixing to separating limbs or to side plates (21).

7. An energy guiding chain according to one of claims 3 through 5, in particular according to claim 5, **characterised in that** the eyes are integrated in side plates (21) of the energy guiding chain.

8. An energy guiding chain according to one of claims 1 through 7 **characterised in that** the energy guiding chain (12) is provided with a tensile strain relief means.

9. An energy guiding chain according to one of claims 1 through 8, **characterised in that** the triggering cord (30) is produced in the form of a rope or cable or in the form of a single fiber, in particular of steel wire or technical plastic, wherein the triggering cord is preferably so selected that with a working load it has a tensile elongation of <3%, in particular preferably <1%; and/or **in that** the triggering cord is of an overall length substantially equal to the length of the energy guiding chain and less than 1.5 times the length of the energy guiding chain.

10. An energy guiding chain according to one of claims 1 through 8, in particular according to claim 1, **characterised in that** the triggering cord is guided by the energy guiding chain at the height of the neutral fiber thereof, wherein a relative movement of the triggering cord is detected by the detector upon a break in the energy guiding chain.

11. An energy guiding chain according to one of claims 1 through 8, in particular according to claim 1, **characterised in that** the triggering cord is guided by the energy guiding chain at least over a length corresponding to the region of movement of the direction-changing curve (28), wherein the triggering cord is guided by the energy guiding chain preferably at regular spacings.

12. An energy guiding chain according to one of claims 1 through 11 **characterised in that** each link member respectively has two outer side plates (21) or parts which are hingedly connected to adjacent side plates or parts, wherein a first triggering cord (30) is provided along one outer side and a second triggering cord (30) is provided along the opposite outer side and wherein preferably for each side a corresponding sensor (36) is connected separately to the respective triggering cord (30) .

13. A monitoring system (10) for protecting an energy guiding chain from a failure including an evaluation unit (14) connected to a detector arranged at the energy guiding chain, **characterised by** an energy guiding chain (12) according to one of claims 1 through 12, wherein the detector (16) connected to the triggering cord (30) is connected to the evaluation unit and the evaluation unit (14) evaluates signals detected by the detector in respect of a possible failure in the energy guiding chain.

14. A monitoring system according to claim 13 wherein the evaluation unit (14) triggers an emergency stop of the entrainment member if a failure in the energy guiding chain was detected by way of the triggering cord (30).

15. A monitoring system according to claim 12 or claim 13 wherein the evaluation unit (14) detects a failure if a signal (S) produced by the detector (16) lies outside a tolerance field.

16. Use of a detector (16) and a low-stretch triggering cord (30) for detecting a failure in an energy guiding chain (12), wherein the triggering cord (30) is mechanically operatively connected to the detector (16) and the detector detects a failure in the energy guiding chain based on a change in a kinematic parameter of the triggering cord (30).

## Revendications

1. Chaîne de guidage d'énergie (12) pour la protection contre une panne, comprenant : une pluralité de maillons (20) ou de segments interconnectés pour guider une ou plusieurs lignes, telles que des câbles, tuyaux ou similaires, entre une base (26) et un membre d'entraînement (24) mobile relativement à la base, les maillons ou segments étant articulés et pouvant former un angle les uns par rapport aux autres pour former une courbe (28) de changement de direction; et un détecteur pour surveiller la chaîne de guidage d'énergie,
**caractérisé en ce que**
le détecteur (16) est relié de manière opérationnelle à un cordon de déclenchement à faible étirement (30) pour détecter une panne dans la chaîne de guidage d'énergie et comprend un capteur (36) pour détecter un paramètre cinématique, le cordon de déclenchement (30) coopérant de façon mécanique avec le capteur (36) et étant guidé par la chaîne de guidage d'énergie.

2. Chaîne de guidage d'énergie selon la revendication 1, **caractérisée en ce que** le détecteur (16) comprend un capteur (36) pour détecter la distance de déplacement, la vitesse et/ou l'accélération et **en ce que** le cordon de déclenchement (30) coopère avec le capteur (36) comme une corde de traction.

3. Chaîne de guidage d'énergie selon la revendication 2, **caractérisée en ce qu'**il est prévu sur ou dans la chaîne de guidage d'énergie (12) des oeillets (32) par lesquels le cordon de déclenchement (30) est guidé librement dans la direction longitudinale, un mouvement relatif du cordon de déclenchement étant détecté par le détecteur lors d'une rupture dans la chaîne de guidage d'énergie, le cordon de déclenchement (30) étant monté de préférence dans un état précontraint.

4. Chaîne de guidage d'énergie selon la revendication 3, **caractérisée en ce que** les oeillets (32) sont prévus à des espacements réguliers qui mesurent <50%, de préférence <33%, d'une longueur de la chaîne de guidage d'énergie qui s'étend sur un arc de 180° de la courbe de changement de direction, les oeillets (32) étant de préférence prévus à chaque maillon ou segment (20).

5. Chaîne de guidage d'énergie selon l'une des revendications 3 ou 4, en particulier selon la revendication 4, **caractérisée en ce que** les oeillets s'étendent à la manière d'un guidage coulissant dans la direction longitudinale avec jeu transversal et présentent des embouchures (33) des deux côtés qui s'ouvrent dans une configuration courbée ou arrondie dans la direction longitudinale, leur courbure étant adaptée à la position angulaire maximale des maillons (20) ou segments articulés.

6. Chaîne de guidage d'énergie selon l'une des revendications 3 à 5, en particulier selon la revendication 5, **caractérisée en ce que** les oeillets (32) sont intégrés en tant que composants dans des plaques de séparation séparées (29) ou en tant qu'éléments de fixation séparés, en particulier sous forme d'éléments moulés par injection, pour la fixation sur des plaques de séparation ou sur des plaques latérales (21).

7. Chaîne de guidage d'énergie selon l'une des revendications 3 à 5, en particulier selon la revendication 5, **caractérisée en ce que** les oeillets sont intégrés dans des plaques latérales (21) de la chaîne de guidage d'énergie.

8. Chaîne de guidage d'énergie selon l'une des revendications 1 à 7, **caractérisée en ce que** la chaîne de guidage d'énergie (12) est munie d'un moyen de décharge de traction.

9. Chaîne de guidage d'énergie selon l'une des revendications 1 à 8, **caractérisée en ce que** le cordon de déclenchement (30) est fabriqué sous la forme d'une corde ou d'un câble ou sous la forme d'une seule fibre, en particulier en fil d'acier ou en matière plastique technique, le cordon de déclenchement étant de préférence choisi de telle sorte que, avec une charge de travail, il présente un allongement en traction de <3%, en particulier <1% ; et/ou que le cordon de déclenchement a une longueur totale sensiblement égale à celle de la chaîne de guidage d'énergie et inférieure à 1,5 fois celle de la chaîne de guidage d'énergie.

10. Chaîne de guidage d'énergie selon l'une des revendications 1 à 8, en particulier selon la revendication 1, **caractérisée en ce que** le cordon de déclenchement est guidé par la chaîne de guidage d'énergie à hauteur de sa fibre neutre, un mouvement relatif du cordon de déclenchement étant détecté par le détecteur lors d'une rupture dans la chaîne de guidage d'énergie.

11. Chaîne de guidage d'énergie selon l'une des revendications 1 à 8, en particulier selon la revendication 1, **caractérisée en ce que** le cordon de déclenchement est guidé par la chaîne de guidage d'énergie au moins sur une longueur correspondant à la zone de mouvement de la courbe de changement de direction (28), le cordon de déclenchement étant guidé de préférence à intervalles réguliers par la chaîne de guidage d'énergie.

12. Chaîne de guidage d'énergie selon l'une des revendications 1 à 11, **caractérisée en ce que** chaque maillon comporte respectivement deux plaques latérales extérieures (21) ou parties qui sont reliées de manière articulée à des plaques ou parties latérales adjacentes, un premier cordon de déclenchement (30) étant prévu sur un côté extérieur et un second cordon de déclenchement (30) sur le côté extérieur opposé et un capteur correspondant (36) étant de préférence prévu séparément pour chaque côté à la corde correspondante (30) .

13. Système de surveillance (10) pour protéger une chaîne de guidage d'énergie d'une panne, comprenant une unité d'évaluation (14) reliée à un détecteur disposé sur la chaîne de guidage d'énergie, **caractérisé par** une chaîne de guidage d'énergie (12) selon l'une des revendications 1 à 12, le détecteur (16) relié au cordon de déclenchement (30) étant relié à l'unité d'évaluation et l'unité d'évaluation (14) analysant les signaux détectés par le détecteur concernant une éventuelle panne dans la chaîne de guidage d'énergie.

14. Système de surveillance selon la revendication 13, dans lequel l'unité d'évaluation (14) déclenche un arrêt d'urgence du membre d'entraînement si une panne de la chaîne de guidage d'énergie a été détectée par l'intermédiaire du cordon de déclenchement (30).

15. Système de surveillance selon la revendication 12 ou la revendication 13, dans lequel l'unité d'évaluation (14) détecte une panne si un signal (S) produit par le détecteur (16) se trouve en dehors d'un champ de tolérance.

16. Utilisation d'un détecteur (16) et d'un cordon de déclenchement à faible allongement (30) pour détecter une panne dans une chaîne de guidage d'énergie (12), dans laquelle le cordon de déclenchement (30) est relié mécaniquement de manière opérationnelle au détecteur (16) et le détecteur détecte une panne dans la chaîne de guidage d'énergie en fonction d'un changement dans un paramètre cinématique du cordon de déclenchement (30).
